# EUROPEAN PATENT SPECIFICATION

(11) **EP 3 506 447 B1**
(45) Date of publication and mention of the grant of the patent: **18.05.2022**
(21) Application number: 17211147.8
(22) Date of filing: 29.12.2017
(51) Int. Cl.: H02J 3/24

(54) **METHOD AND ARRANGEMENT FOR BALANCING SUPPLY AND DEMAND IN AN ELECTRICITY GRID**
VERFAHREN UND ANORDNUNG ZUM AUSGLEICHEN VON ANGEBOT UND NACHFRAGE IN EINEM STROMNETZ
PROCÉDÉ ET AGENCEMENT D'ÉQUILIBRAGE DE L'OFFRE ET DE LA DEMANDE DANS UN RÉSEAU D'ALIMENTATION ÉLECTRIQUE

(43) Date of publication of application: 03.07.2019
(73) Proprietor: UPM Energy Oy, 00100 Helsinki (FI)
(72) Inventor: Haromo, Juha, 42100 Jämsä (FI); Käki, Anssi, 00200 Helsinki (FI)
(74) Representative: Papula Oy

(56) References cited:
- WO-A1-2013/010266
- US-A1- 2015 112 501
- US-A1- 2016 320 435
- US-A1- 2017 098 937
- US-A1- 2017 102 162
- US-A1- 2017 241 650

## Description

### FIELD OF THE INVENTION

The invention relates to electricity grids, i.e. backbone networks for electricity transmission. In particular the invention relates to the task of balancing the supply and demand so that an optimum amount of generator power is coupled to the grid at any given time.

### BACKGROUND OF THE INVENTION

A high-voltage grid is the geographically distributed backbone of electricity transmission. Power stations supply the grid with electricity, and at the consuming end are industrial companies, distribution network companies, and ultimately individual households. Losses in the grid sum up with the actual loads to form the total demand of electric power. All users should receive a sufficient amount of electric power at all times, and the AC frequency of the grid should remain as stable as possible. Simultaneously the use of energy sources should be optimized. It is important to maintain a balance between supply and demand in the grid.

The AC frequency of the grid constitutes a relatively reliable indicator of the balance between supply and demand, so that excessive demand lowers the frequency and vice versa. The operator responsible for the grid may decide how various levels of frequency variation will trigger the use of power reserves. For example in a grid the nominal AC frequency of which is 50 Hz, normal operation reserves may be used to maintain the frequency error below 0.2%, i.e. between 49.9 and 50.1 Hz. If the frequency decreases below 49.9 Hz and all normal operation reserves are in use already, disturbance reserves are taken into use.

Owners of installations with power-generating capability may sell this capability to a grid operator for use as a power reserve. As the general rule, agile power reserves (i.e. ones that can react quickly and flexibly to variations in demand) are more valuable than ones that take a longer time to activate and that are slower to ramp up or down according to need. This rule in power reserve pricing may have significant economic consequences to the owners of such installations that involve inherent complicatedness in controlling the level of produced output power.

A prior art document US 2017/0098937 A1 describes control systems and methods for controlling a grid frequency in an electric power grid. The method involves monitoring the grid frequency, and instructing one or more power stations to take corrective action if deviations from the nominal grid frequency are detected.

### SUMMARY

It is an objective of the invention to present a method and arrangement for using a power station as a power reserve of an electricity grid in a flexible and effective manner. A particular objective of the invention is that the power station could be made to respond to detected changes in demand within a short time. A further objective of the invention is that the method and arrangement of the kind described above are scalable for use in association with power stations of different capacities.

The objectives of the invention are achieved by predicting future changes in the AC frequency of the grid and using the results of such predicting to perform preparatory measures in the operation of the power station that shorten the time required to actually ramp up or down its generated power in response to a later received triggering signal.

A method according to the invention is defined in claim 1.

An arrangement according to the invention is defined in claim 12.

A computer program according to the invention is defined in claim 13.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates the use of a recovery boiler as a power reserve of an electricity grid,
**Figure 2** illustrates an example of frequency controlled use of a power reserve,
**Figure 3** illustrates another example of frequency controlled use of a power reserve,
**Figure 4** illustrates history data and possible prediction values,
**Figure 5** illustrates an example of a prediction process,
**Figure 6** illustrates an example of comparing predicted values to a first threshold,
**Figure 7** illustrates an example triggering a change of power,
**Figure 8** illustrates examples of various predicted values,
**Figure 9** illustrates an example of selecting the first threshold,
**Figure 10** illustrates the use of a neural network according to an embodiment, and
**Figure 11** illustrates a method in the form of a state diagram.

### DETAILED DESCRIPTION

The method and arrangement described here are generally applicable to power stations of various kinds. As an example of a power station, the recovery boiler of a pulp mill is considered.

A recovery boiler is used to recover inorganic process chemicals and burn the organic waste that comes out of the pulp-making process. Due to the relatively large amounts of organic waste and its relatively high energy content, the recovery boiler of a pulp mill may produce significantly more energy in the form of heat and electricity than what is needed to run the pulp mill itself. In many cases the owner of a recovery boiler can sell the excess energy to others, for example to an operator of an electricity grid and/or a district heating system.

The owner of a recovery boiler may receive significant additional income by announcing some of the energy-producing capability as a power reserve to a grid operator. However, since the starting point of designing a recovery boiler is the need to provide the best possible support to the pulp-making process and not primarily the generation of reserve power, the flexibility of the recovery boiler as a reserve power source has not conventionally been optimal.

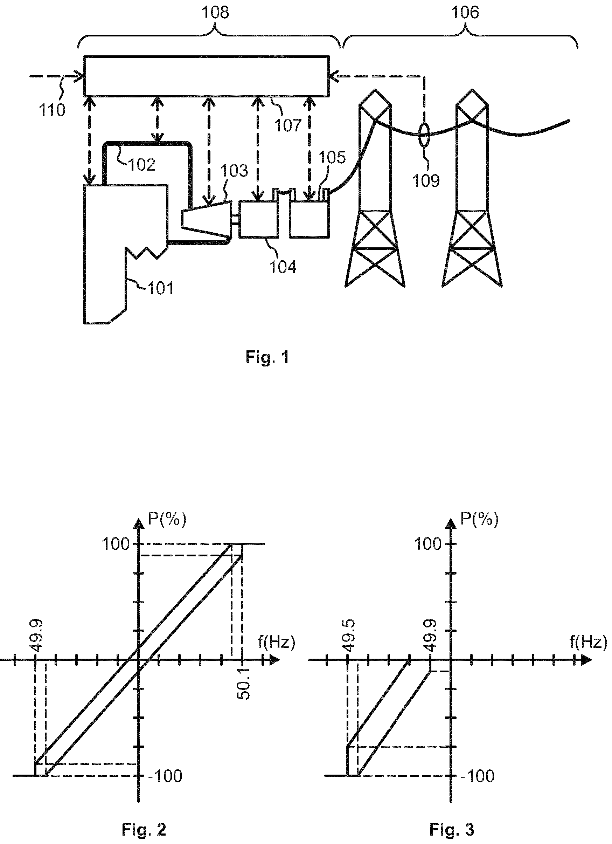

Fig. 1 illustrates schematically a recovery boiler 101, the main purpose of which is to recover inorganic process chemicals and burn the organic waste that comes out of the pulp-making process. During operation it releases large amounts of thermal energy that is used to heat steam. A steam pipe system 102 conducts the hot, pressurized steam to a turbine 103, which drives a generator 104. A switching and transforming arrangement 105 is used to controllably couple the output of the generator to the transmission lines of an electricity grid 106.

An arrangement 107 is provided for balancing the supply and demand in the electricity grid 106. In particular, the purpose of the arrangement 107 is to control the operations of the power station 108, the power-generating unit of which is the recovery boiler 101. For this purpose fig. 1 shows schematically control connections from the arrangement 107 to all parts of the power station 108. The arrangement 107 may comprise for example one or more computers of a control room, as well as the sensors and actuators that are needed to provide the arrangement 107 with feedback information about the operation of the power station 108 and to enable the arrangement 107 to affect the way in which the power station 108 operates. For the purposes of the present description it is immaterial whether the arrangement 107 is located centrally in one location or whether it involves devices and interconnections distributed over two or more locations.

A frequency detector 109 is schematically shown, and provided for detecting the AC frequency of the electricity grid 106 in real time and for providing the arrangement 107 with information about the actual detected AC frequency of the electricity grid 106. The detected AC frequency of the electricity grid 106 constitutes an important piece of control information, because it tells the momentary balance between supply and demand in the electricity grid 106. The arrangement 107 may receive also other kinds of control information, the sources of which are only schematically shown in fig. 1 as 110. The other kinds of control information may comprise for example general environmental factors like the date and time, information about actual and/or predicted weather, information about the actual and/or predicted status of other power stations and/or large consumers of electric energy coupled to the electricity grid 106, and the like.

Fig. 2 illustrates an example of a norm that a frequency controlled normal operation reserve of an electricity grid must obey. The task of such a normal operation reserve is to participate in maintaining the AC frequency of the electricity grid between 49.9 and 50.1 Hz. In order to fulfil this purpose, the supply or load that the normal operation reserve provides to the electricity grid must remain within the elongated hexagon. The coordinates of its corner points are (50.1, 100), (50.1, 90), (49.91, -100), (49.9, -100), (49.9, -90), and (50.09, 100). In the coordinates the first number is the AC frequency of the electricity grid in Hz, and the second number is the power of the power reserve in percentage units. The sign convention is such that negative percentages represent reduction in load (or increase in power generation), and positive percentages represent increase in load (or reduction in power generation).

Fig. 3 illustrates an example of a norm that a frequency controlled disturbance reserve of an electricity grid must obey. The task of such a disturbance reserve is to provide additional supply to and/or decrease the load of the electricity grid in situations where the AC frequency of the electricity grid drops below a certain limit. In the example of fig. 3 this limit is 49.9 Hz. The supply or load that the disturbance reserve provides to the electricity grid must remain within the elongated hexagon with the coordinates of its corner points as (49.9, 0), (49.9, -10), (49.55, -100), (49.5, -100), (49.5, -75), and (49.8, 0) .

The operator of the electricity grid may set additional requirements for frequency controlled normal operation reserves or disturbance reserves that obey the norms illustrated in figs. 2 or 3 respectively. Typical additional requirements are for example minimum and maximum nominal power limits; requirements of continuous controllability; provision of real time measurement data to the grid operator; and time based requirements like the maximum delay between a detected change in the AC frequency of the grid and the consequent change in reserve power. The additional requirements may be bound to the extent and/or rate of change in the grid frequency: for example, the lower the grid frequency, the faster the frequency controlled reserves must react. The additional requirements may set a predetermined response time, within which the appropriate change in reserve power must be effected. Depending on which kind of reserve is concerned and what kind of change is observed in the grid frequency, the predetermined response may be zero (requiring immediate action as fast as the systems can react), in the order of some seconds, or in the order of some minutes at the most.

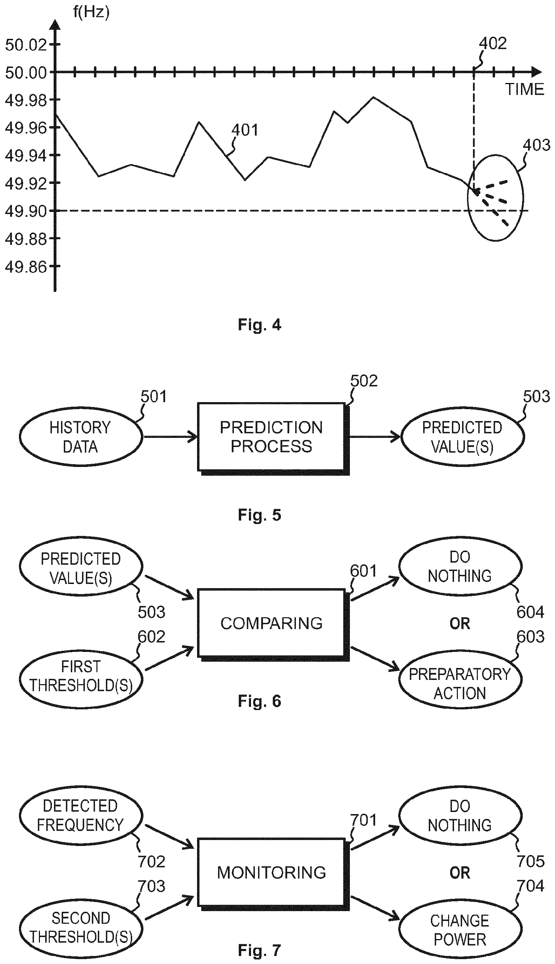

Fig. 4 illustrates the concept of history data and its possible relevance to a method according to an embodiment. The graph 401 represents the actual detected AC frequency of an electricity grid. It has been monitored for a certain duration, so the stored detection results constitute a set of history data indicative of at least a detected AC frequency of the electricity grid over a period of time. At moment 402 the important question is, how the AC frequency of the electricity grid will behave next. As illustrated with the dashed lines within the oval 403, there are several possible directions of change, and at least some of these may be such that the grid frequency might fall below a threshold (here: 49.90 Hz) that necessitates activating some reserve power. In order to ensure that a recovery boiler or some other reserve power source may provide such reserve power quickly, efficiently and flexibly, it would be advantageous if the method could produce some more detailed information about such a future development before it actually takes place.

The concept of history data may encompass also other kinds of data than just a detected AC frequency of the electricity grid over a period of time. One example of such other kind of data is weather data, because changes in weather (like changes in outside temperature, changes in wind speed, or changes in cloud coverage) have a tendency to cause corresponding changes in the supply and/or demand of electric power. Another example of such other kind of data is time and calendar data, because factors like the volume of industrial production and social behavior of users tend to follow some relatively regular patterns as a function of time, causing corresponding changes in the demand of electric power.

An example of the usefulness of time data is the phenomenon where a number of producers and large-scale consumers of electric energy may change their contribution simultaneously at the border between two consecutive commitment periods. In many cases the operator of the grid requires producers and large-scale consumers to commit themselves to some nominal contribution (level of produced or consumed energy) for a fixed time like one full hour. When one commitment period ends and another begins, there may be abrupt changes in the balance between supply and demand in the grid.

Another example of a combination of significant weather, clock, and calendar data is Christmas in Finland: traditional Christmas foods are cooked slowly in the (electric) oven during the hours before Christmas Eve, and many people use the waiting time to go to the (electric) sauna. The temperature outside may be - 20 degrees Celsius, which means that at the same time a lot of energy is needed for heating all inhabited buildings.

Another kind of history data that can be used is information about the so-called actual production stack that was in use at each particular moment of time. The actual production stack means the collection of power-generating arrangements that were feeding power to the grid. Different kinds of power stations have different characteristics that may affect their ability to meet changes in demand. As a simplified example it may have been noticed that each time when the actual production stack involved a significant amount of solar power, it was increasingly difficult to make supply meet demand towards afternoon and evening - because the Sun was going down already. Thus if the prediction process noticed a decreasing trend of detected AC frequency in the most recent set of history data, and also noticed that it is around 5 o'clock PM and the actual production stack has a signification proportion of solar power, it may produce a predicted value closer to the first threshold than if the actual production stack consisted solely of e.g. nuclear power.

As illustrated in fig. 5, the method may comprise processing the set of history data 501 in a prediction process 502 to produce, based on the set of history data 501, one or more predicted values 503. The predicted value or values 503 are indicators of what the prediction process 502 would consider the most probable future development of the AC frequency of the electricity grid. There are several possible ways of implementing the prediction process 502, typically involving some probabilistic calculations, and it may produce several possible kinds of predicted values. Examples of these will be described in more detail later in this text.

As illustrated in fig. 6, the method may comprise comparing 601 the predicted value (s) 503 to a first threshold 602. This is a form of automated decision-making. The expression "comparing to a threshold" may be understood in a wide sense as examining the predicted value(s) 503 in order to decide whether they suggest a reasonable probability that some known triggering limit will be met or exceeded in the near future. An alternative description is to speak about evaluating the predicted value(s) 503 in view of a predefined set of decision-making criteria in order to estimate, whether one or more of said criteria will be fulfilled in the near future. What is near future in this sense depends on how fast the output power of the recovery boiler or other reserve power source can be changed efficiently. Above it was pointed out that there may be several possible kinds of predicted values 503, so correspondingly there may be several different kinds of first thresholds 602. Examples of these are given later in this description.

What happens as a result of the comparing 601 depends on whether the predicted value(s) 503 were found to meet or exceed the first threshold (s) 602 or not. As a response to the comparing 601 indicating that the predicted value (s) 503 meets or exceeds the first threshold(s) 602 (or that one or more of the decision-making criteria are fulfilled), the method may comprise commencing at least one preparatory action 603 to prepare the recovery boiler or other reserve power source for a possible oncoming change in the power it feeds to the electricity circuit. If, however, the predicted value (s) 503 are not found to meet or exceed the first threshold(s) 602, the comparing 601 does not result in any immediate action at the moment. This result is shown as 604 in fig. 6.

As illustrated in fig. 7, the method may comprise monitoring 701 the actual detected AC frequency 702 of the electricity grid. As a response to the actual detected AC frequency 702 meeting or exceeding one or more second threshold (s) 703, the method comprises changing - within a predetermined response time - the power that the recovery boiler or other reserve power source feeds into the electricity grid. This result is shown as 704 in fig. 7, and if it was preceded by a preparatory action 603 of the kind illustrated in fig. 6, it may take place faster, more efficiently, and/or in an otherwise more advantageous manner than if such a preparatory action had not been done. It is also possible, however, that the monitoring 701 does not show the actual detected AC frequency meeting or exceeding the second threshold(s) 703 during a period when a previously made preparatory action remains valid. In such a case the monitoring 701 does not result in any changes of power. This result is shown as 705 in fig. 7.

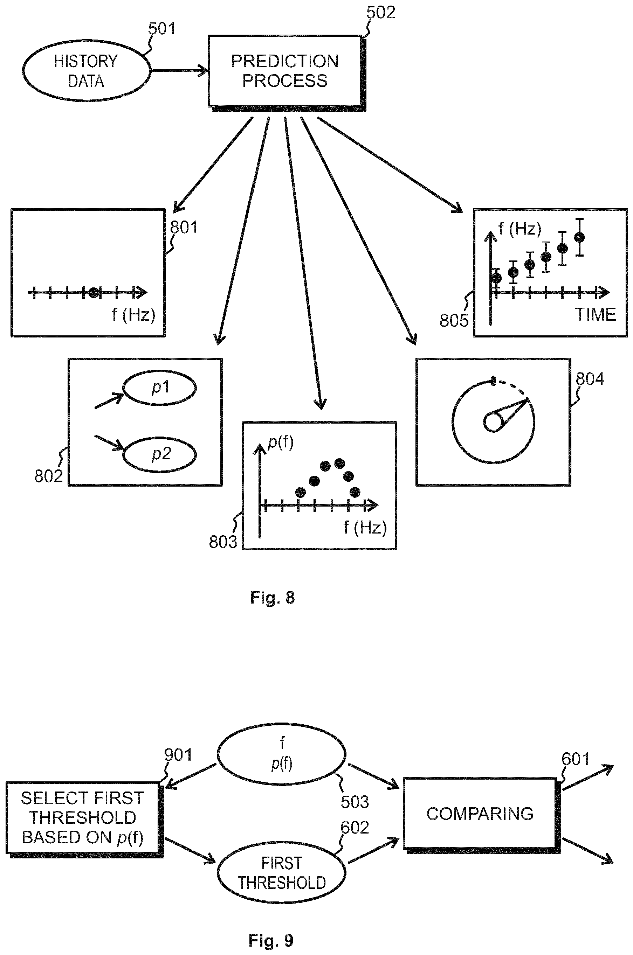

Fig. 8 is a schematic illustration of some exemplary kinds of predicted values that the prediction process 502 may produce. The first example is that the prediction process 502 produces at least one predicted AC frequency 801 of the electricity grid as the predicted value. There may be a fixed time difference between the moment of time of producing the predicted value and the moment of time at which said predicted value is pertinent. In other words, the prediction process 502 may be configured to always predict the AC frequency 801 of the electricity grid, like, three minutes ahead. The length of such a fixed time should be selected to be sufficiently long to allow performing some effective preparatory action to prepare a recovery boiler or other kind of reserve power source to a change in power it feeds into the electricity grid. On the other hand, the length of such a fixed time should be selected short enough so that the predicted AC frequency 801 would have a significant probability of being close to what actually will happen. It is well known that random or otherwise unpredictable variations in some affecting factors make all calculational prediction methods the more inaccurate the further ahead the prediction should be made.

The second example in fig. 8 is that the prediction process 502 produces at least one estimated probability 802 as the predicted value. As a simplified illustrative example, we may assume that there is exactly one triggering AC frequency value of the electricity grid to which the method described here should react. For example, a reserve power source should be activated if the AC frequency of the electricity grid meets or goes below 49.9 Hz, and deactivated if the frequency increases above 49.9 Hz. In such a case the prediction process 502 may produce a value between 0 and 1 (or 0% and 100%) to indicate, what is the probability that the triggering AC frequency value will be met or exceeded (going below 49.9 Hz if currently above it, or increasing above 49.9 Hz if currently below it) within a fixed time from the moment of producing the predicted value. The same considerations apply to the length of such a fixed time as above in case of the predicted AC frequency 801 of the electricity grid.

The third example in fig. 8 is that the prediction process 502 produces at least one pair 803 of a predicted AC frequency of the electricity grid and an associated probability of that predicted AC frequency. In the specific instance of this example shown in fig. 8 it is assumed that the prediction process 502 has produced five such pairs, and these have been plotted in a frequency/probability coordinate system as a coarse graphical representation of a probability distribution. Even if only one such pair is produced, it may offer a more versatile basis for making the decision about whether or not to commence a preparatory action than e.g. just a predicted frequency value without any associated probability. Namely, making the decision can be made dependent on how probable it is that some threshold frequency will be met or exceeded during the period of time during which the predicted values are pertinent. Or using a slightly different approach, making the decision can be made dependent on what predicted frequency (or what range of predicted frequencies) will be encountered at at least some required threshold probability.

A more formal definition of the more versatile decision-making referred to above can be given with reference to fig. 9, which is a modification of fig. 6 earlier. The comparing step 601 comprises comparing a predicted AC frequency f of the electricity grid (which is one of the predicted values 503) to a first threshold 602. The value of the first threshold 602 is selected 901 on the basis of the respective associated probability *p*(f). If the prediction process produces two or more pairs of a predicted AC frequency of the electricity grid and an associated probability, the comparing may comprise comparing one or more of the predicted AC frequencies to respective selected first threshold values, each of which are selected on the basis of the respective associated probability.

The fourth example in fig. 8 is that the prediction process 502 produces a time value 804 indicative of an estimated time difference between the moment of time of producing said predicted value and a moment of time at which said predicted value is pertinent. This example may again cover several more detailed variants. In a very simple variant the produced time value is the one and only predicted value and indicates, how long time it will most probably take before a triggering AC frequency value will be encountered next time. In a slightly more elaborate variant there are produced a number of pairs of a time value and associated probability. Such pairs can then be used to present a probability distribution of the estimated remaining time before the triggering AC frequency value will be encountered next time.

Another slightly more elaborate variant is actually shown as a fifth example in fig. 8. In this example the prediction process 502 produces a timeline 805 of predicted values. The predicted values in the timeline are indicative of predicted AC frequencies of the electricity grid at different moments of time ahead of the moment of producing the timeline of predicted values. In other words, the timeline provides a prediction of how the AC frequency of the electricity grid will develop in the nearest future. Each value may be associated with a corresponding confidence interval, or with a probability distribution that indicates the probability of each predicted frequency at that future moment of time. Various approaches are then available in selecting the first threshold, to which the predicted value(s) are compared. For example, the first threshold may be a triggering value defined for the rate of change that can be deduced from the timeline.

Depending on the type and also on the unique properties of each reserve power source there may be a selection of possible preparatory actions and their combinations that can be taken. These possible preparatory actions may differ from each other in many respects. For example, some of them may only require very simple and straightforward measures that can be performed automatically, while others may involve some aspects of consideration that should be subjected to the evaluation of a human operator before being put into operation. Also some of the possible preparatory actions may be quite radical in the sense that they prepare the recovery boiler or other reserve power source for even large changes in output power, while some others may be more pertinent to small, gradual changes instead. Therefore the preparatory action to be taken is not necessarily the same in all situations. According to an embodiment, at least one preparatory action is selected on the basis of a criterion that can involve at least one of the following: a predicted AC frequency of the electricity grid indicated by the predicted value(s); an estimated probability indicated by the predicted value(s); or the time difference between the moment of time of producing the predicted value (s) and a moment of time at which the predicted value(s) is pertinent.

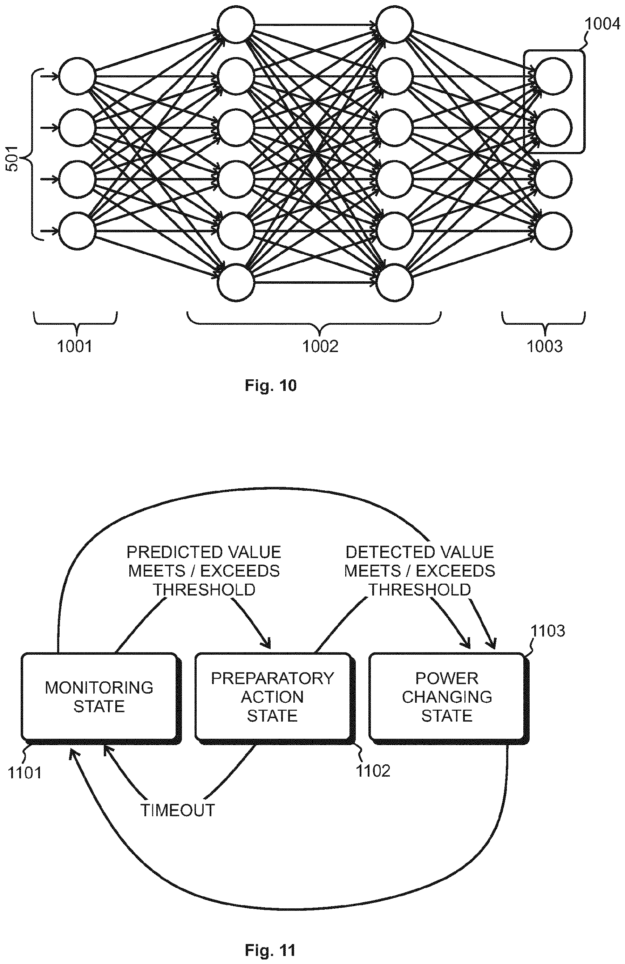

Fig. 10 illustrates another approach to processing history data and comparing to one or more thresholds. These steps of the method can be performed in a neural network that comprises an input layer 1001; zero, one, or more hidden layers 1002; and an output layer 1003. The set of history data 501 are fed as inputs to the nodes of the input layer 1001. Processing the set of history data in a prediction process and producing a predicted value take the form of neural network computing that gives, as a result, one or more output states possibly associated with weighting factors or probability values. Comparing to a threshold may be implemented for example so that if the most probable output state that comes out of said neural network computing corresponds to a set 1004 of one or more predefined triggering output nodes, the predicted value is said to meet or exceed the first threshold. In an alternative embodiment the nodes of the output layer 1003 constitute a set of possible predicted frequency values, in which case the results of the neural network computing can be treated similarly as the probability distribution of frequency/probability pairs marked as 803 in fig. 8.

Fig. 11 illustrates a method according to an embodiment in the form of a state diagram. The execution of the method can be said to be in exactly one of a monitoring state 1101, a preparatory action state 1102, or a power changing state 1103 at a time. In practice this kind of exclusive categorization of states may be slightly inaccurate, because an apparatus capable of multitasking can perform simultaneous or essentially simultaneous actions that in the state diagram representation belong to different states. However, the state diagram representation may be quite intuitive in explaining how the execution of the method proceeds in general.

The monitoring state 1101 comprises providing a set of history data indicative of at least a detected AC frequency of the electricity grid over a period of time. It comprises also processing said set of history data in a prediction process to produce, based on the set of history data, at least one predicted value. Further it comprises comparing said at least one predicted value to at least one first threshold. If the comparing indicates that the at least one predicted value meets or exceeds the at least one first threshold, a transition to state 1102 occurs.

The preparatory action state 1102 comprises commencing at least one preparatory action to prepare a recovery boiler or some other reserve power source to a change in the power that it feeds into the electricity grid.

The step of monitoring an actual detected AC frequency of the electricity grid is continuously or repeatedly executed both in the monitoring state 1101 and in the preparatory action state 1102. The intended way of operating is such that once the preparatory action has been commenced in state 1102, as a response to the actual detected AC frequency meeting or exceeding a second threshold a transition to the power changing state 1103 takes place. The power changing state 1103 then comprises changing the power that the recovery boiler or other reserve power source feeds into the electricity grid.

However, it is possible that previously calculated predicted values failed to predict the behavior of the actual detected AC frequency of the electricity grid properly. If this happens while the execution of the method is in the monitoring state 1101, it means that action must be taken immediately to begin changing the output power, even without any preparatory action if possible. Therefore fig. 11 illustrates also the possibility of a direct transition from state 1101 to state 1103. A different case is if the previously calculated predicted values failed to predict the behavior of the actual detected AC frequency of the electricity grid properly while the execution of the method is in the preparatory action state 1102. Namely, this means that the preparatory action was commenced even if in practice it was not needed. A timeout may trigger a transition from state 1102 back to state 1101 in the state diagram representation of fig. 11. More formally it can be said that as a response to the actual detected AC frequency not meeting or exceeding any second threshold within a predetermined period of time after commencing at least one preparatory action, the method may comprise performing at least one cancelling action to cancel the effect of at least one of the commenced preparatory actions.

Some types of exemplary power stations will be described next, together with the types of preparatory action that can be applied and the ways in which their output power can be changed.

The primary fuel of a recovery boiler of a pulp mill is black liquor. Only the organic residues in the black liquor will burn, while the inorganic components are to be recovered. Inside the furnace the inorganic components increase the thermal inertia of the system, which basically means that changes in the output power of a recovery boiler cannot be made as quickly and effectively by just changing the flow of fuel to the furnace as in power stations that just burn oil or gas as a fuel.

Similar considerations concerning thermal inertia apply in power stations that utilize fluidized bed combustion. The sand, limestone, and/or other particulate support material in the fluidized bed does not burn but absorbs a considerable amount of heat, again increasing the thermal inertia of the system. This makes fast changes in output power more difficult than in gas or oil burners where the thermal inertia is relatively much lower.

If more fuel is fed into the furnace of a recovery boiler or a fluidized bed combustor without simultaneously increasing the amount of extracted heat, the temperature inside the furnace increases, which may lead to disadvantageous consequences. For example the mineral particulates of the fluidized bed may begin to sinter, which causes clogging in the furnace and eventually necessitates shutting down the process for cleaning. In a recovery boiler the oxidation and reduction reactions have a certain window of optimal values for the process parameters, outside of which the burning is not clean anymore, causing increased emissions and reduced yield of recovered chemicals. Thus a mere increase in supplying fuel may not be as such a very advantageous kind of preparatory action.

The part of a recovery boiler or fluidized bed combustor where steam is generated is called the steam drum. Increasing the pressure and/or temperature, and/or raising the water level in the steam drum is the kind of preparatory action that is taken, because it essentially means temporarily storing some additional thermal energy in the steam/water circulation. Such temporarily stored thermal energy can be quickly released into output power by increasing the power at which the steam turns the turbine. Increasing the pressure, temperature, and/or water level in the drum can be supported with increasing the supply of fuel to the furnace, which in the case of a recovery boiler may mean increasing the supply of black liquor and/or the supply of support fuels.

If preparatory action has been taken by increasing the amount of thermal energy temporarily stored in the steam/water circulation but it turns out that the frequency of the grid does not decrease below any triggering limit, it is recommendable to discharge the excess energy without using it to produce output power to the grid. This can involve for example opening a reduction valve that passes some of the steam past the turbine. Opening the reduction valve does not as such consume the temporarily stored excess energy, but it allows it to be dumped into a condenser, freshwater heater, pressure accumulator, or other kind of energy-dissipating or -storing apparatus.

From the viewpoint of emission control, having to discharge excess energy from the steam/water circulation is better than having to rapidly increase the supply of fuel to the combustor. In other words, it may be recommendable to take some preparatory action also on the basis of a somewhat uncertain prediction, even if it may turn out that no actual increase in output power will eventually be needed. Namely, the alternative might be that a sudden increase in output power will be actually required when no preparatory action was taken. Such a sudden increase tends to cause a disadvantageously large temporary increase in emissions because the "gas pedal" was pressed fast and it took time before the combustion reactions returned into the window of optimal parameter values. Another possible disadvantageous consequence of having to increase the output power quickly, without (sufficient) preparatory action, is increased cost: it may be mandatory to use (solely, or at least largely) support fuels for the sudden increase. The support fuels are generally more expensive per unit of generated power than black liquor or other primary fuel.

Using the steam/water circulation as an energy buffer allows making the changes in combustion parameters slowly and carefully enough so that the combustion reactions remain in the window of optimal parameter values. The time scale of making significant increases in the pressure, temperature, and/or water level of the drum is in the order of minutes. Consequently this kind of preparatory action can be taken if one or more predicted values indicate that the actual detected AC frequency might meet or exceed the triggering limit or second threshold in the matter of minutes.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for balancing supply and demand in an electricity grid (106), comprising:
- providing a set of history data (501) indicative of at least a detected AC frequency of said electricity grid over a period of time,
- processing said set of history data (501) in a prediction process (502) to produce, based on said set of history data, at least one predicted value (503),
- comparing (601) said at least one predicted value (503) to at least one first threshold (602),
- as a response to said comparing indicating that said at least one predicted value (503) meets or exceeds said at least one first threshold (602), commencing at least one preparatory action (603) to prepare a power station (108) to a change in power it feeds into said electricity grid (106), wherein said at least one preparatory action comprises at least one of: changing pressure in a steam drum; changing temperature in a steam drum; changing a water level in a steam drum; changing the supply of fuel to a furnace,
- monitoring (701) an actual detected AC frequency of said electricity grid (106), and
- as a response to said actual detected AC frequency meeting or exceeding a second threshold, changing (704) - within a predetermined response time - the power that said power station (108) feeds into said electricity grid (106).

2. A method according to claim 1, wherein said prediction process (502) produces at least one predicted AC frequency (801) of said electricity grid (106) as said predicted value (503).

3. A method according to claim 1 or 2, wherein said prediction process (502) produces at least one estimated probability as said predicted value (503).

4. A method according to any of claims 1 to 3, wherein said prediction process (502) produces at least one pair (803) of a predicted AC frequency of said electricity grid (106) and an associated probability indicative of an estimated probability of said predicted AC frequency of said electricity grid (106).

5. A method according to claim 4, wherein:
- said comparing (601) comprises comparing said predicted AC frequency of said electricity grid (106) to a first threshold value (602) that is selected on the basis of the respective associated probability.

6. A method according to claim 5, wherein:
- said prediction process (502) produces two or more pairs of a predicted AC frequency of said electricity grid (106) and an associated probability indicative of an estimated probability of the respective predicted AC frequency of said electricity grid (106), and
- said comparing (601) comprises comparing one or more of said predicted AC frequencies of said electricity grid (106) to respective selected first threshold values (602) that are selected on the basis of the respective associated probability.

7. A method according to any of the preceding claims, wherein said prediction process (502) produces a time value (804) indicative of an estimated time difference between the moment of time of producing said predicted value (503) and a moment of time at which said predicted value is pertinent.

8. A method according to any of claims 2 to 7, wherein said at least one preparatory action is selected on the basis of at least one of: a predicted AC frequency (801) of said electricity grid (106) indicated by said predicted value (503), an estimated probability (802) indicated by said predicted value (503), the time difference (804) between the moment of time of producing said predicted value (503) and a moment of time at which said predicted value is pertinent.

9. A method according to any of the preceding claims, wherein said prediction process (502) produces a timeline (805) of predicted values, the predicted values in said timeline being indicative of predicted AC frequencies of said electricity grid (106) at different moments of time ahead of the moment of producing said timeline of predicted values.

10. A method according to any of the preceding claims, comprising:
- as a response to said actual detected AC frequency not meeting or exceeding said second threshold (703) within a predetermined period of time after commencing said at least one preparatory action, performing at least one cancelling action to cancel the effect of at least one of the commenced preparatory actions.

11. A method according to any of the preceding claims, wherein said changing of the power that said power station feeds into said electricity grid (106) comprises releasing temporarily stored thermal energy from a steam/water circulation into output power by increasing the power at which steam turns a turbine.

12. An arrangement for balancing supply and demand in an electricity grid (106), the arrangement being configured to:
- provide a set of history data (501) indicative of at least a detected AC frequency of said electricity grid (106) over a period of time,
- process said set of history data (501) in a prediction process (502) to produce, based on said set of history data, at least one predicted value (503),
- compare (601) said at least one predicted value (503) to at least one first threshold (602),
- as a response to said comparing indicating that said at least one predicted value (503) meets or exceeds said at least one first threshold (602), commence at least one preparatory action to prepare a power station (108) to a change in power it feeds into said electricity grid (106), wherein said at least one preparatory action comprises at least one of: changing pressure in a steam drum; changing temperature in a steam drum; changing a water level in a steam drum; changing the supply of fuel to a furnace,
- monitor (701) an actual detected AC frequency of said electricity grid (106), and
- as a response to said actual detected AC frequency meeting or exceeding a second threshold (703), change the power that said power station (108) feeds into said electricity grid (106).

13. A computer program comprising one or more sets of one or more machine-readable instructions that, when executed by one or more processors, are configure to cause the arrangement of claim 12 to implement a process comprising:
- providing a set of history data (501) indicative of at least a detected AC frequency of an electricity grid (106) over a period of time,
- processing said set of history data (501) in a prediction process (502) to produce, based on said set of history data (501), at least one predicted value (503),
- comparing (601) said at least one predicted value (503) to at least one first threshold (602),
- as a response to said comparing indicating that said at least one predicted value (503) meets or exceeds said at least one first threshold (602), commencing at least one preparatory action (603) to prepare a power station to a change in power it feeds into said electricity grid (106), wherein said at least one preparatory action comprises at least one of: changing pressure in a steam drum; changing temperature in a steam drum; changing a water level in a steam drum; changing the supply of fuel to a furnace,
- monitoring (701) an actual detected AC frequency of said electricity grid (106), and
- as a response to said actual detected AC frequency meeting or exceeding a second threshold (703), changing (704) the power that said power station (108) feeds into said electricity grid (106).

## Patentansprüche

1. Verfahren zum Ausgleichen von Einspeisung und Bedarf in einem Stromnetz (106), umfassend:
- Bereitstellen eines Satzes von Verlaufsdaten (501), die zumindest für eine detektierte Wechselstrom-Frequenz des Stromnetzes über eine Zeitperiode indikativ sind,
- Verarbeiten des Satzes von Verlaufsdaten (501) in einem Vorhersageprozess (502), um basierend auf dem Satz von Verlaufsdaten zumindest einen Vorhersagewert (503) zu erzeugen,
- Vergleichen (601) des zumindest einen Vorhersagewerts (503) mit zumindest einem ersten Schwellenwert (602),
- als Antwort darauf, dass das Vergleichen angibt, dass der zumindest eine Vorhersagewert (503) den zumindest einen ersten Schwellenwert (602) erreicht oder übersteigt, Beginnen zumindest einer Vorbereitungsaktion (603) zum Vorbereiten eines Kraftwerks (108) auf eine Änderung bei der Leistung, die es dem Stromnetz (106) zuführt, wobei die zumindest eine Vorbereitungsaktion umfasst zumindest eines von: Ändern des Drucks in einer Dampftrommel; Ändern einer Temperatur in einer Dampftrommel; Ändern eines Wasserpegels in einer Dampftrommel; Verändern der Zufuhr von Kraftstoff an einen Brennofen,
- Überwachen (701) einer tatsächlichen detektierten Wechselstrom-Frequenz des Stromnetzes (106), und
- als Antwort darauf, dass die tatsächliche detektierte Wechselstrom-Frequenz einen zweiten Schwellenwert erreicht oder übersteigt, Ändern (704) - innerhalb einer vorbestimmten Antwortzeit - der Leistung, die das Kraftwerk (108) dem Stromnetz (106) zuführt.

2. Verfahren gemäß Anspruch 1, wobei der Vorhersageprozess (502) zumindest eine vorhergesagte Wechselstrom-Frequenz (801) des Stromnetzes (106) als den Vorhersagewert (503) erzeugt.

3. Verfahren gemäß Anspruch 1 oder 2, wobei der Vorhersageprozess (502) zumindest eine Schätzwahrscheinlichkeit als den Vorhersagewert (503) erzeugt.

4. Verfahren gemäß einem der Ansprüche 1 bis 3, wobei der Vorhersageprozess (502) zumindest ein Paar (803) einer vorhergesagten Wechselstrom-Frequenz des Stromnetzes (106) und einer assoziierten Wahrscheinlichkeit, die für eine Schätzwahrscheinlichkeit der vorhergesagten Wechselstrom-Frequenz des Stromnetzes (106) indikativ ist, erzeugt.

5. Verfahren gemäß Anspruch 4, wobei:
- das Vergleichen (601) das Vergleichen der vorhergesagten Wechselstrom-Frequenz des Stromnetzes (106) mit einem ersten Schwellenwert (602) umfasst, der auf Basis der jeweiligen assoziierten Wahrscheinlichkeit ausgewählt wird.

6. Verfahren gemäß Anspruch 5, wobei:
- der Vorhersageprozess (502) zwei oder mehr Paare von einer vorhergesagten Wechselstrom-Frequenz des Stromnetzes (106) und einer assoziierten Wahrscheinlichkeit, die für eine Schätzwahrscheinlichkeit der entsprechenden vorhergesagten Wechselstrom-Frequenz des Stromnetzes (106) indikativ ist, erzeugt, und
- das Vergleichen (601) das Vergleichen einer oder mehrerer der vorhergesagten Wechselstrom-Frequenzen des Stromnetzes (106) mit jeweiligen ausgewählten ersten Schwellenwerten (602), die auf Basis der jeweiligen assoziierten Wahrscheinlichkeit ausgewählt werden, umfasst.

7. Verfahren gemäß einem der vorherstehenden Ansprüche, wobei der Vorhersageprozess (502) einen Zeitwert (804) erzeugt, der für eine geschätzte Zeitdifferenz zwischen dem Zeitmoment des Erzeugens des Vorhersagewerts (503) und einem Zeitmoment, zu welchem der Vorhersagewert relevant ist, indikativ ist.

8. Verfahren gemäß einem von Ansprüchen 2 bis 7, wobei die zumindest eine Vorbereitungsaktion ausgewählt wird auf Basis von zumindest einem von: einer vorhergesagten Wechselstrom-Frequenz (801) des Stromnetzes (106), die durch den Vorhersagewert (503) angegeben wird, einer SchätzWahrscheinlichkeit (802), die durch den Vorhersagewert (503) angegeben wird, der Zeitdifferenz (804) zwischen dem Zeitmoment des Erzeugens des Vorhersagewerts (503), und einem Zeitmoment, zu welchem der Vorhersagewert relevant ist.

9. Verfahren gemäß einem der vorstehenden Ansprüche, wobei der Vorhersageprozess (502) eine Zeitlinie (805) von Vorhersagewerten erzeugt, wobei die Vorhersagewerte in der Zeitlinie für vorhergesagte Wechselstrom-Frequenzen des Stromnetzes (106) zu unterschiedlichen Zeitmomenten vor dem Moment des Erzeugens der Zeitlinie von Vorhersagewerten indikativ sind.

10. Verfahren gemäß einem der vorstehenden Ansprüche, umfassend:
- als eine Antwort auf die tatsächlich detektierte Wechselstrom-Frequenz, die den zweiten Schwellenwert (703) innerhalb einer vorbestimmten Zeitperiode nach Beginnen der zumindest einen Vorbereitungsaktion nicht erfüllt oder übersteigt, Durchführen zumindest einer Abbruchsaktion, um den Effekt zumindest einer der begonnenen Vorbereitungsaktionen aufzuheben.

11. Verfahren gemäß einem der vorstehenden Ansprüche, wobei das Ändern der Leistung, die das Kraftwerk dem Stromnetz (106) zuführt, das Freisetzen von zeitweilig gespeicherter thermischer Energie aus einer Dampf/Wasser-Zirkulation in Ausgangsleistung durch Erhöhen der Leistung, bei welcher Dampf eine Turbine dreht, umfasst.

12. Anordnung zum Ausgleichen von Einspeisung und Bedarf in einem Stromnetz (106), wobei die Anordnung konfiguriert ist:
- einen Satz von Verlaufsdaten (501) bereitzustellen, die zumindest für eine detektierte Wechselstrom-Frequenz des Stromnetzes über eine Zeitperiode indikativ sind,
- den Satz von Verlaufsdaten (501) in einem Vorhersageprozess (502) zu verarbeiten, um basierend auf dem Satz von Verlaufsdaten zumindest einen Vorhersagewert (503) zu erzeugen,
- den zumindest einen Vorhersagewert (503) mit zumindest einem ersten Schwellenwert (602) zu vergleichen (601),
- als Antwort darauf, dass das Vergleichen angibt, dass der zumindest eine Vorhersagewert (503) den zumindest einen ersten Schwellenwert (602) erreicht oder übersteigt, zumindest eine Vorbereitungsaktion (603) zum Vorbereiten eines Kraftwerks (108) auf eine Änderung bei der Leistung, die es dem Stromnetz (106) zuführt, zu beginnen, wobei die zumindest eine Vorbereitungsaktion umfasst zumindest eines von: Ändern des Drucks in einer Dampftrommel; Ändern einer Temperatur in einer Dampftrommel; Ändern eines Wasserpegels in einer Dampftrommel; Verändern der Zufuhr von Kraftstoff an einen Brennofen,
- eine tatsächliche detektierte Wechselstrom-Frequenz des Stromnetzes (106) zu überwachen (701), und
- als Antwort darauf, dass die tatsächliche detektierte Wechselstrom-Frequenz einen zweiten Schwellenwert (703) erreicht oder übersteigt, die Leistung, die das Kraftwerk (108) dem Stromnetz (106) zuführt, zu ändern.

13. Computerprogramm, das einen oder mehrere Sätze von einer oder mehrerer maschinenlesbarer Anweisungen umfasst, die bei Ausführung auf einem oder mehreren Prozessoren konfiguriert sind, die Anordnung von Anspruch 12 zu veranlassen, einen Prozess zu implementieren, welcher umfasst:
- Bereitstellen eines Satzes von Verlaufsdaten (501), die zumindest für eine detektierte Wechselstrom-Frequenz des Stromnetzes über eine Zeitperiode indikativ sind,
- Verarbeiten des Satzes von Verlaufsdaten (501) in einem Vorhersageprozess (502), um basierend auf dem Satz von Verlaufsdaten (501) zumindest einen Vorhersagewert (503) zu erzeugen,
- Vergleichen (601) des zumindest einen Vorhersagewerts (503) mit zumindest einem ersten Schwellenwert (602),
- als Antwort darauf, dass das Vergleichen angibt, dass der zumindest eine Vorhersagewert (503) den zumindest einen ersten Schwellenwert (602) erreicht oder übersteigt, Beginnen zumindest einer Vorbereitungsaktion (603) zum Vorbereiten eines Kraftwerks auf eine Änderung bei der Leistung, die es dem Stromnetz (106) zuführt, wobei die zumindest eine Vorbereitungsaktion umfasst zumindest eines von: Ändern des Drucks in einer Dampftrommel; Ändern einer Temperatur in einer Dampftrommel; Ändern eines Wasserpegels in einer Dampftrommel; Verändern der Zufuhr von Kraftstoff an einen Brennofen,
- Überwachen (701) einer tatsächlichen detektierten Wechselstrom-Frequenz des Stromnetzes (106), und
- als Antwort darauf, dass die tatsächliche detektierte Wechselstrom-Frequenz einen zweiten Schwellenwert (703) erreicht oder übersteigt, Ändern (704) der Leistung, die das Kraftwerk (108) dem Stromnetz (106) zuführt.

## Revendications

1. Procédé pour l'équilibrage de l'offre et la demande dans un réseau électrique (106), comprenant :
- la fourniture d'un ensemble de données d'historique (501) indiquant au moins une fréquence AC détectée dudit réseau électrique sur une période de temps,
- le traitement dudit ensemble de données d'historique (501) dans un processus de prédiction (502) afin de générer, sur la base dudit ensemble de données d'historique, au moins une valeur prédite (503),
- la comparaison (601) de ladite au moins une valeur prédite (503) à au moins un premier seuil (602),
- en réponse à ladite comparaison indiquant l'atteinte ou le dépassement dudit au moins un premier seuil (602) par ladite au moins une valeur prédite (503), l'initiation d'au moins une action préparatoire (603) afin de préparer une centrale électrique (108) à un changement de puissance qu'elle fournit audit réseau électrique (106), dans lequel ladite au moins une action préparatoire comprend au moins un élément parmi : le changement de pression dans un collecteur de vapeur; le changement de température dans un collecteur de vapeur; le changement d'un niveau d'eau dans un collecteur de vapeur ; le changement de l'alimentation en combustible d'un foyer,
- la surveillance (701) d'une fréquence AC détectée réelle dudit réseau électrique (106), et
- en réponse au fait que ladite fréquence AC détectée réelle atteint ou dépasse un deuxième seuil, le changement (704) - dans un temps de réponse prédéterminé - de la puissance que ladite centrale électrique (108) fournit audit réseau électrique (106).

2. Procédé selon la revendication 1, dans lequel ledit processus de prédiction (502) génère au moins une fréquence AC prédite (801) dudit réseau électrique (106) en tant que ladite valeur prédite (503).

3. Procédé selon la revendication 1 ou 2, dans lequel ledit processus de prédiction (502) génère au moins une probabilité estimée en tant que ladite valeur prédite (503).

4. Procédé selon l'une quelconque des revendications 1 à 3, dans lequel ledit processus de prédiction (502) génère au moins un couple (803) d'une fréquence AC prédite dudit réseau électrique (106) et d'une probabilité associée indiquant une probabilité estimée de ladite fréquence AC prédite dudit réseau électrique (106).

5. Procédé selon la revendication 4, dans lequel :
- ladite comparaison (601) comprend la comparaison de ladite fréquence AC prédite dudit réseau électrique (106) à une première valeur seuil (602) qui est sélectionnée sur la base de la probabilité associée respective.

6. Procédé selon la revendication 5, dans lequel :
- ledit processus de prédiction (502) génère au moins deux couples d'une fréquence AC prédite dudit réseau électrique (106) et d'une probabilité associée indiquant une probabilité estimée de la fréquence AC prédite respective dudit réseau électrique (106), et
- ladite comparaison (601) comprend la comparaison d'une ou plus desdites fréquences AC prédites dudit réseau électrique (106) à des premières valeurs seuil (602) sélectionnées respectives qui sont sélectionnées sur la base de la probabilité associée respective.

7. Procédé selon l'une quelconque des revendications précédentes, dans lequel ledit processus de prédiction (502) génère une valeur de temps (804) indiquant une différence de temps estimée entre le moment où ladite valeur prédite (503) est générée et un moment où ladite valeur prédite est pertinente.

8. Procédé selon l'une quelconque des revendications 2 à 7, dans lequel ladite au moins une action préparatoire est sélectionnée sur la base d'au moins un élément parmi : une fréquence AC prédite (801) dudit réseau électrique (106) indiquée par ladite valeur prédite (503), une probabilité estimée (802) indiquée par ladite valeur prédite (503), la différence de temps (804) entre le moment où ladite valeur prédite (503) est générée et un moment où ladite valeur prédite est pertinente.

9. Procédé selon l'une quelconque des revendications précédentes, dans lequel ledit processus de prédiction (502) génère une chronologie (805) des valeurs prédites, les valeurs prédites dans ladite chronologie indiquant les fréquences AC prédites dudit réseau électrique (106) à différents moments antérieurs au moment où ladite chronologie des valeurs prédites est générée.

10. Procédé selon l'une quelconque des revendications précédentes, comprenant :
- en réponse au fait que ladite fréquence AC détectée réelle n'atteint pas ou ne dépasse pas ledit deuxième seuil (703) dans un temps de réponse prédéterminé après l'initiation de ladite au moins une action préparatoire, la mise en œuvre d'au moins une action d'annulation afin d'annuler l'effet de l'au moins une des actions préparatoires initiées.

11. Procédé selon l'une quelconque des revendications précédentes, dans lequel ledit changement de la puissance que ladite centrale électrique fournit audit réseau électrique (106) comprend la libération d'énergie thermique, stockée temporairement à partir d'une circulation de vapeur/d'eau, en puissance de sortie en augmentant la puissance à laquelle la vapeur fait tourner une turbine.

12. Agencement pour l'équilibrage de l'offre et la demande dans un réseau électrique (106), l'agencement étant configuré pour :
- fournir un ensemble de données d'historique (501) indiquant au moins une fréquence AC détectée dudit réseau électrique (106) sur une période de temps,
- traiter ledit ensemble de données d'historique (501) dans un processus de prédiction (502) afin de générer, sur la base dudit ensemble de données d'historique, au moins une valeur prédite (503),
- comparer (601) ladite au moins une valeur prédite (503) à au moins un premier seuil (602),
- en réponse à ladite comparaison indiquant l'atteinte ou le dépassement dudit au moins un premier seuil (602) par ladite au moins une valeur prédite (503), initier au moins une action préparatoire afin de préparer une centrale électrique (108) à un changement de puissance qu'elle fournit audit réseau électrique (106), dans lequel ladite au moins une action préparatoire comprend au moins un élément parmi : le changement de pression dans un collecteur de vapeur; le changement de température dans un collecteur de vapeur; le changement d'un niveau d'eau dans un collecteur de vapeur ; le changement de l'alimentation en combustible d'un foyer,
- surveiller (701) une fréquence AC détectée réelle dudit réseau électrique (106), et
- en réponse au fait que ladite fréquence AC détectée réelle atteint ou dépasse un deuxième seuil (703), changer la puissance que ladite centrale électrique (108) fournit audit réseau électrique (106).

13. Programme informatique comprenant un ou plusieurs ensembles d'une ou plusieurs instructions lisibles par machine qui, lorsqu'elles sont exécutées par un ou plusieurs processeurs, sont configurées pour amener l'agencement de la revendication 12 à mettre en œuvre un procédé comprenant :
- la fourniture d'un ensemble de données d'historique (501) indiquant au moins une fréquence AC détectée d'un réseau électrique (106) sur une période de temps,
- le traitement dudit ensemble de données d'historique (501) dans un processus de prédiction (502) afin de générer, sur la base dudit ensemble de données d'historique (501), au moins une valeur prédite (503),
- la comparaison (601) de ladite au moins une valeur prédite (503) à au moins un premier seuil (602),
- en réponse à ladite comparaison indiquant l'atteinte ou le dépassement dudit au moins un premier seuil (602) par ladite au moins une valeur prédite (503), l'initiation d'au moins une action préparatoire (603) afin de préparer une centrale électrique à un changement de puissance qu'elle fournit audit réseau électrique (106), dans lequel ladite au moins une action préparatoire comprend au moins un élément parmi : le changement de pression dans un collecteur de vapeur; le changement de température dans un collecteur de vapeur; le changement d'un niveau d'eau dans un collecteur de vapeur ; le changement de l'alimentation en combustible d'un foyer,
- la surveillance (701) d'une fréquence AC détectée réelle dudit réseau électrique (106), et
- en réponse au fait que ladite fréquence AC détectée réelle atteint ou dépasse un deuxième seuil, (703), le changement (704) de la puissance que ladite centrale électrique (108) fournit audit réseau électrique (106).
